# FASCICULE DE BREVET EUROPEEN

(11) **EP 3 981 647 B1**
(45) Date de publication et mention de la délivrance du brevet: **10.01.2024**
(21) Numéro de dépôt: 21201615.8
(22) Date de dépôt: 08.10.2021
(51) Int. Cl.: B60Q 1/00, B60Q 1/26, B60R 13/04

(54) **PIÈCE DE CARROSSERIE COMPORTANT UN ÉLÉMENT LUMINEUX SOUS RÉSINE TRANSPARENTE**
FAHRZEUGKAROSSERIETEIL UMFASSEND EINE MIT EINEM TRANSPARENTEN HARZ BEDECKTE LEUCHTVORRICHTUNG
VEHICLE BODY PART COMPRISING A LIGHTING DEVICE COVERED BY A TRANSPARENT RESIN

(30) Priorité: 08.10.2020 FR 2010301
(43) Date de publication de la demande: 13.04.2022
(73) Titulaire: Compagnie Plastic Omnium SE, 69007 Lyon (FR)
(72) Inventeur: TRESSE, David, 01150 SAINTE-JULIE (FR); ANDRE, Gérald, 01150 SAINTE-JULIE (FR); BOISSON, Damien, 01150 SAINTE-JULIE (FR); BRIZIN, Jérôme, 01150 SAINTE-JULIE (FR)
(74) Mandataire: LLR

(56) Documents cités:
- WO-A1-2020/053368
- WO-A1-2020/127502
- DE-A1-102017 006 693
- FR-A1- 2 933 664
- FR-A1- 3 085 380

## Description

L'invention concerne le domaine de l'industrie automobile, et plus particulièrement une pièce de carrosserie de véhicule automobile comportant un élément optique.

On connaît des éléments rapportés sur une pièce de carrosserie ayant notamment pour objet de rehausser une ligne ou de souligner une forme dans le but de renforcer l'image que le constructeur souhaite associer à son modèle de véhicule.

A titre d'exemple, les baguettes chromées courant le long de la partie latérale du véhicule, les protections de bas de caisse, le logo de la marque, les enjoliveurs de poignées de porte, les coques de rétroviseurs sont ces pièces de style dont le design fait l'objet d'un soin particulier de la part des concepteurs du véhicule. Par extension, toutes les pièces de la carrosserie visibles de l'extérieur et participant à l'aspect général du véhicule, telles qu'un ouvrant, un parechoc, une calandre, peuvent être considérées également comme des éléments de carrosserie ou des pièces de style entrant dans le champ d'application de l'invention.

Dans le but de renforcer l'effet produit par ces éléments de carrosserie il a été proposé de placer une source lumineuse derrière une surface de l'élément de carrosserie formée d'un matériau transparent. On parle alors d'éléments lumineux pour ces éléments de carrosserie, ou encore de signature lumineuse. Par exemple, on connaît des pare-chocs de véhicule comportant des fentes lumineuses.

Actuellement, la plupart de ces éléments lumineux comportent des sources lumineuses placées directement sous une surface transparente de l'éléments de carrosserie. On peut par exemple retrouver des dispositifs lumineux comprenant des sources de lumière disposées dans des cavités pratiquées dans un corps diffusant. Lorsque la source lumineuse est allumée, la lumière traverse l'élément transparent et l'élément tout entier est illuminé.

Ces éléments lumineux présentent l'inconvénient de devoir préparer un support rigide qui soit parfaitement adapté au logement présent dans la pièce de carrosserie. Ainsi, il est difficile d'adapter cette solution à tous types de logements de manière aisée.

De plus, l'assemblage de tels éléments lumineux sur des peaux de carrosserie, a l'inconvénient de mettre en évidence des jeux d'assemblage et des affleurements importants, incompatible avec la qualité visuelle requise pour un véhicule automobile.

Ce problème est d'autant plus important pour de grandes pièces de carrosserie lorsque l'élément optique doit être de grande taille. En effet, la seule possibilité pour rapporter un tel élément optique longiligne est de prévoir une fente longiligne dans la pièce de carrosserie pour l'accueillir. Or, une telle fente, de par la souplesse de la paroi de la pièce, a tendance à s'ouvrir, accentuant ainsi les jeux et/ou les affleurements.

Ce problème peut été résolu pour des pièces non transparentes, en utilisant des points d'accroche avec la paroi de la pièce, car ces derniers ne seraient pas visibles depuis l'extérieur du véhicule. Mais pour un élément optique, il est nécessaire que la lumière ne soit pas perturbée par des éléments tels que des éléments d'accroche, la lumière devant être homogène sur toute la longueur de l'élément optique.

On connaît également une solution par le document FR3074116, qui décrit une pièce de carrosserie de véhicule automobile, comportant une paroi munie d'une fente pleine peau, et un élément optique muni d'un corps rapporté dans la fente par emboitage élastique.

Les documents WO 2020/127502 A1, DE 10 2017 006693 A1, FR 2 933 664 A1, FR 3 085 380 A1 et WO 2020/053368 A1 décrivent des pièces de carrosserie avec un élément lumineux selon le préambule de la revendication 1.

L'invention a notamment pour but de s'affranchir des inconvénients évoqués précédemment, en fournissant une pièce de carrosserie de véhicule automobile munie d'un élément optique sous une ouverture d'une paroi de la pièce, l'étanchéité et la protection étant assurées par une résine injectée ou coulée dans l'ouverture.

A cet effet l'invention a pour objet une pièce de carrosserie de véhicule automobile selon la revendication 1.

Selon l'invention :
- l'élément optique comporte au moins un support fixé sur la face interne en regard de l'ouverture, et sur lequel est fixé l'élément lumineux directement en regard de l'ouverture ;
- l'élément lumineux comporte un corps principal souple apte à être assemblé par insertion dans le support ;

Suivant d'autres caractéristiques optionnelles de la pièce de carrosserie prises seules ou en combinaison :
- l'élément optique est fixé de façon étanche sur la face interne, par exemple par adhésivage ;
- l'élément optique comporte au moins un élément lumineux apte à transmettre une lumière depuis la face interne vers la face externe de la paroi au travers de la résine ;
- l'élément lumineux est un ensemble de sources lumineuses de type LED par exemple, une fibre optique ou un guide de lumière relié à une source lumineuse de type LED par exemple ;
- la résine est injectable ou peut être coulée, à des pressions inférieures à 6 bars et des températures inférieures à 80°C ;
- l'ouverture et l'élément optique sont longilignes ;
- l'ouverture ne vient pas en contact avec l'un des bords de la pièce ;
- le support est réalisé dans un matériau choisi seul ou en combinaison parmi les matériaux suivants : polypropylène, polypropylène transparent ou translucide, silicone transparent ou translucide, ou polyuréthane transparent ou translucide, polycarbonate mélangé à un additif de type élastomère, tel que du TPU, toute matière transparente ou translucide ;
- le corps souple de l'élément lumineux est réalisé dans un matériau choisi seul ou en combinaison parmi les matériaux suivants : silicone transparent ou translucide, ou polyuréthane transparent ou translucide, polycarbonate mélangé à un additif de type élastomère, tel que du TPU, polypropylène transparent ;
- la résine est réalisée dans un matériau choisi seul ou en combinaison parmi les matériaux suivants : polyuréthane transparent ou translucide ;
- la paroi est réalisée dans un matériau choisi seul ou en combinaison parmi les matériaux suivants : polypropylène ou polyuréthane ;
- la face externe est recouverte d'un revêtement de type peinture ;
- la pièce forme un pare-chocs de véhicule automobile.

L'invention a également pour objet un procédé de fabrication de la pièce de carrosserie de véhicule automobile selon l'invention, dans lequel on réalise les étapes suivantes :
i- étape de réalisation de la paroi ;
ii- étape où l'on rapporte le support de
   l'élément optique sur la face interne de la paroi
iv- étape de réalisation de l'ouverture ;
v- étape d'assemblage de l'élément lumineux sur le support ;
vi- étape de mise en place d'une résine au sein de l'ouverture.

Suivant d'autres caractéristiques optionnelles de la pièce de carrosserie prises seules ou en combinaison :
- à l'étape ii, on rapporte le support avec le corps sur la face interne de la paroi ;
- on réalise séquentiellement les étapes i à vi ;
- l'étape v est réalisée avant ou en parallèle de l'étape i ;
- on réalise une étape iii d'application d'un revêtement, tel qu'une peinture ;
- l'étape iii est réalisée avant l'étape ii ;
- l'étape iv est réalisée avant l'étape iii ;
- l'étape iii est réalisée en dernier, après l'étape vi ;
- lors de l'étape ii, on rapporte l'élément optique par adhésivage ;
- lors de l'étape vi on met en place la résine au sein de l'ouverture, par injection ou coulée.

### Brève description des figures

L'invention sera mieux comprise à la lecture de la description qui va suivre donnée uniquement à titre d'exemple et faite en se référant aux dessins annexés dans lesquels :
[Fig. 1] la figure 1 illustre, vu de dessus, un exemple de pièce de carrosserie de véhicule automobile selon l'invention ;
[Fig. 2] la figure 2 illustre l'exemple de pièce de carrosserie de véhicule automobile de la figure 1, vu de dessous ;
[Fig. 3] la figure 3 illustre un véhicule automobile comportant plusieurs pièces de carrosserie selon l'invention ;
[Fig. 4] la figure 4 illustre un exemple de support d'élément lumineux ;
[Fig. 5] la figure 5 est une coupe d'un exemple de pièce de carrosserie de véhicule automobile selon l'invention ;
[Fig. 6] la figure 6 illustre les différentes étapes d'un exemple d'un procédé de fabrication d'une pièce selon l'invention.

### Description détaillée

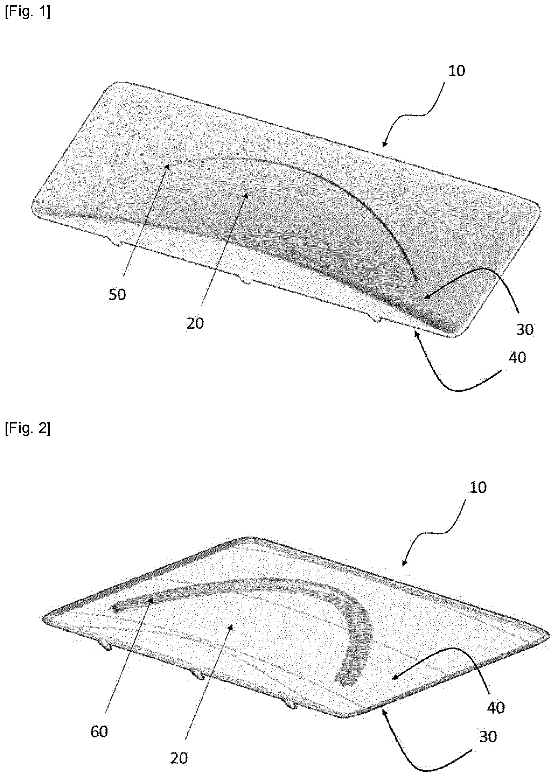

On se réfère maintenant à la figure 1 qui illustre un exemple de pièce 10 de carrosserie de véhicule automobile selon l'invention, vu de dessus. La figure 2 illustre la même pièce vue de dessous. La pièce 10 de carrosserie comporte une paroi 20 possédant une face externe 30 et une face interne 40. La face externe 30 est visible depuis l'extérieur du véhicule lorsque la pièce 10 est montée sur un véhicule, contrairement à la face interne, dirigée vers l'intérieur du véhicule. La paroi 20 peut être en polypropylène par exemple.

La paroi 20 comporte au moins une ouverture 50. Cette ouverture 50 peut-être « pleine peau » c'est-à-dire que cette ouverture 50 ne vient pas en contact avec l'un des bords de la pièce 10, comme illustré sur les figures 1 et 2 par exemple. L'ouverture 50 peut être longiligne, formant une fente sur la paroi 20.

La pièce 10 comporte également un élément optique 60. L'élément optique 60 est un élément apte à transmettre une lumière depuis la face interne 40 vers la face externe 30 de la paroi 20, c'est-à-dire vers l'extérieur du véhicule lorsque la pièce 10 est montée sur un véhicule.

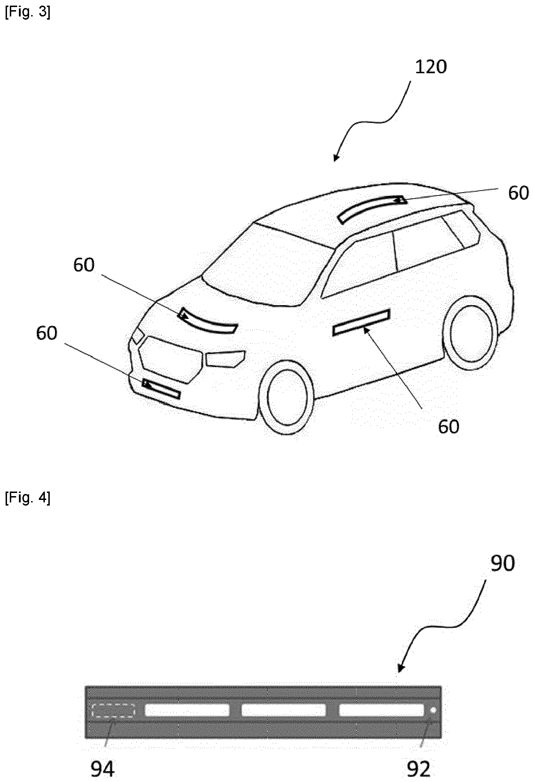

La figure 3 illustre un véhicule automobile 120 comportant plusieurs pièces 10 de carrosserie selon l'invention, chaque pièce comportant un élément optique 60. Comme illustré sur la figure 3, la pièce de carrosserie 10 peut être un toit, un capot, une portière, un parechoc, mais elle pourrait également être un hayon par exemple.

L'élément optique 60 est fixé sur la face interne 40 en regard de l'ouverture 50. Comme illustré sur la figure 2, l'élément optique 60 est de préférence fixé sur la face interne 40 surtout le long de l'ouverture 50.

La lumière émise par l'élément optique 60 peut ainsi traverser la paroi 20 au niveau de l'ouverture 50.

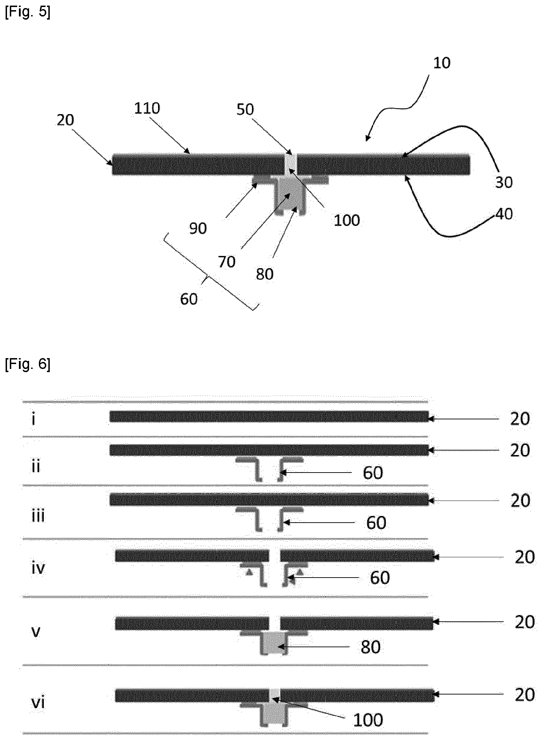

Comme illustré sur la figure 5, l'élément optique 60 comporte au moins un élément lumineux 70 apte à transmettre de la lumière depuis la face interne 40 vers la face externe 30 de la paroi 20 au travers de la résine 100. Cet élément lumineux 70 peut être :
- un ensemble de sources lumineuses, par exemple des sources de type LED ;
- une fibre optique ;
- un guide de lumière relié à une source lumineuse de type LED par exemple.

L'élément optique 60 comporte également un support 90 fixé sur la face interne 40 en regard (le long) de l'ouverture 50. Ce support 90 permet de porter le l'élément lumineux 70. L'élément lumineux 70 est ainsi fixé à ce support 90.

Selon l'invention, l'élément lumineux 70 comporte un corps principal 80 renfermant les sources de lumières, ou le guide de lumière ou formant le guide de lumière. Ce corps 80 est souple et apte à être assemblé par insertion dans le support 90 par emboitage, clipsage ou chaussage. Ceci permet un assemblage facilité de la pièce de carrosserie 10, et également, de suivre les formes complexes que peut avoir l'ouverture 50.

Le corps 80 est réalisé dans une matière souple et compressible permettant d'assurer une étanchéité entre le support 90 et l'élément lumineux 70. De plus, la matière du corps 80 est transparente ou translucide, au moins localement en regard de l'ouverture 50.

Selon un mode de réalisation le corps 80 comporte au moins une partie (localement en regard de l'ouverture 50) en matière transparente ou translucide apte à transmettre une lumière depuis la face interne 40 vers la face externe 30 de la paroi 20. De préférence, l'élément plastique est réalisé d'une seule pièce, en matière transparente ou translucide.

Le corps 80 possède une souplesse apte à lui permettre de suivre le galbe de la pièce 10. Une pièce de carrosserie de grande dimension (longueur supérieure à 800mm), et ayant une épaisseur d'environ 3mm, comporte généralement un galbe. Or il est très difficile, voire impossible, de suivre un tel galbe avec un élément optique rigide, notamment lorsque la fente est longiligne. Un élément longiligne est un membre allongé et mince. Pour une pièce de carrosserie de grande dimension, l'élément optique est un membre ayant une longueur supérieure à 100mm, une largeur inférieure à 25mm (de préférence comprise entre 5 et 10mm), et une épaisseur comprise entre 1,5 mm et 5mm.

L'assemblage du corps 80 longiligne et de faible section, sur la pièce 10, est rendu possible grâce à la souplesse de l'élément optique 60 qui se conforme à la pièce 10 qui l'accueille.

Ainsi, le corps 80 possède une souplesse apte à lui permettre de suivre le galbe de la pièce 10, même si celle-ci est de grande dimension et possède une fente longiligne également de grande dimension. Le corps 80 comporte une souplesse apte à suivre un rayon de courbure de la pièce de carrosserie.

Une telle souplesse peut être obtenue en réalisant le corps 80 en polycarbonate mélangé à un additif de type élastomère, tel que du TPU. Une telle souplesse peut également être obtenue en réalisant le corps 80 en polypropylène transparent. De par sa souplesse, le corps 80 est parfaitement adapté pour des fentes longilignes. Le corps 80 peut ainsi également être en silicone transparent ou translucide, ou polyuréthane (PU) transparent ou translucide.

Selon ce mode de réalisation, le support 90 est également réalisé dans une matière, voire la même, ayant les mêmes propriétés de souplesse afin de conserver les avantages du corps 80. De préférence le support 90 est opaque.

Selon des exemples de réalisation, le support 90 peut être en forme de gouttière rigide, comme illustré sur les figures 2, 5 et 6, dans laquelle l'élément lumineux 70 est clipsé, ou en forme de tube creux dans lequel l'élément lumineux 70 est glissé.

Selon l'invention, décrit sur la figure 4 qui représente en vue de dessus un support 90 comportant :
- une zone technique 92 « en entrée » du support pour insérer la buse d'injection du polyuréthane (PU) pour injecter la résine 100 ; et/ou
- une zone technique 94 « en sortie » du support définissant un volume servant de masselotte afin de constituer un réservoir de trop-plein de la résine 100 injectée.

L'élément optique 60 est fixé, via le support 90, de façon étanche sur la face interne 40, par exemple par adhésivage (voir figure 5). Le moyen d'adhésivage peut également contenir des chicanes servant de masselotte afin de constituer un réservoir de trop-plein de résine 100 injectée.

Afin d'assurer l'étanchéité de l'élément optique 60, l'ouverture 50 est comblée par la résine 100 transparente ou translucide. Ainsi, l'étanchéité entre la face externe 30 et l'élément optique 60 est assurée, et la lumière peut toujours traverser la paroi 20 au niveau de l'ouverture 50.

De préférence, la résine 100 est en contact avec l'élément optique 60, de façon à améliorer l'étanchéité mais aussi le maintien de l'élément optique 60.

Selon un exemple de réalisation, la résine 100 est injectable à basse pression (pression inférieure à 6 bars) et basse température (température inférieure à 80°C), ou peut être coulée à très basse pression (pression inférieure à 6 bars) et basse température (température inférieure à 80°C). Par exemple, la résine 100 peut être une résine en polyuréthane (PU) transparent ou translucide.

Un premier avantage de ce type de résine est qu'elle adhère bien à la matière de type polypropylène (PP), matière privilégiée pour réaliser la paroi 20 de la pièce de carrosserie 10.

Un second avantage de ce type de résine est qu'elle présente une propriété de souplesse une fois durcie, ce qui permet de satisfaire à des attentes en termes de déformations et de chocs subis par la pièce de carrosserie 10.

Enfin, et de façon optionnelle, la face externe 30 peut être recouverte d'un revêtement 110 tel qu'une peinture.

**L'invention porte également sur un procédé de fabrication de la pièce** de carrosserie selon l'invention. Ce procédé comporte les étapes décrites ci-après, et illustrées sur la figure 6.

### i- une étape de réalisation de la paroi 20

La paroi 20 peut être réalisée partout procédé connu des spécialistes. De préférence, la paroi est réalisée en matière plastique au moyen d'un procédé de moulage par injection, de polypropylène par exemple, ou par compression.

### ii- une étape de fixation de l'élément optique 60 sur la paroi 20

Selon l'invention, on rapporte le support 90 de l'élément optique 60, par exemple par adhésivage, sur la face interne 40 de la paroi 20. L'élément optique 60, et notamment selon les exemples illustrés sur les figures, le support 90 est rapporté en regard de l'ouverture 50 si celle-ci est déjà présente sur la paroi 20, ou le support 90 est rapporté au niveau d'une zone destinée à porter l'ouverture 50.

### iii- une étape facultative d'application d'un revêtement 110

Au cours de cette étape, on applique sur la face externe 30, c'est-à-dire la face destinée à être visible depuis l'extérieur du véhicule, un revêtement 110 tel qu'une peinture.

Cette étape peut être précédée d'une autre étape facultative de cuisson de la paroi 20. Une telle étape permet d'améliorer l'adhérence du revêtement sur la face externe 30.

### iv- une étape de réalisation de l'ouverture 50

Au cours de cette étape, on réalise une ouverture 50 au sein de la paroi 20. Cette opération peut être réalisée par découpe laser ou par usinage de la paroi 20. L'usinage peut se faire par fraisage par exemple.

### v- une étape d'assemblage de l'élément lumineux 70 sur le support 90

Au cours de cette étape, on assemble l'élément lumineux 70 sur le support 90. Pour se faire différentes solutions sont mises en place en fonction de la forme du support 90.

Ainsi, lorsque le support 90 est en forme de gouttière, tel que représenté que les figures 2, 5 et 6, l'élément lumineux 70 est introduit dans la gouttière par enfoncement, clippage ou chaussage.

Lorsque le support 90 est en forme de tube, l'élément lumineux 70 est introduit dans le tube par glissement.

### vi- une étape de mise en place d'une résine 100 au sein de l'ouverture 50

Au cours de cette étape, on introduit la pièce 10 dans un moule d'injection, afin d'y injecter la résine 100. Cette injection se fait à basse pression et basse température, afin de ne pas endommager la paroi 20. Avantageusement, on réalise un vide d'air dans le moule lors de l'injection, afin de plaquer le support 90 contre la face 40, pour éviter un risque de décollement du support 90.

Au cours de cette étape, on peut également couler la résine 100 à pression atmosphérique dans l'ouverture 50.

De préférence, la résine 100 est injectée ou coulée de façon à être en contact avec l'élément optique 60, de façon à améliorer l'étanchéité mais aussi le maintien de l'élément optique 60.

Un des avantages de cette mise en place de résine par injection ou coulage, est de permettre de s'affranchir de contrainte d'orientation liées au démoulage et au montage d'une pièce transparente rigide réalisée à part. Elle permet ainsi de suivre des parcours complexes de l'ouverture 50. De plus, ce procédé permet d'apporter une adhérence continue dans l'ouverture ou à proximité de manière à éviter l'accumulation de poussière ou d'eau qui pourrait geler.

Selon une étape optionnelle, avant la mise en place de la résine 100, on réalise un traitement de surface des zones de la paroi 20 destinées à être en contact avec la résine 100, notamment les surface à l'intérieur de l'ouverture 50. Ce traitement de surface peut être un flammage, un traitement au plasma ou une dépose d'un revêtement de type primaire d'adhérence.

Les étapes i à vi peuvent être réalisées dans des ordres variés. Selon un mode réalisation préférentiel, on réalise les étapes i à vi dans l'ordre suivant :
i- étape de réalisation de la paroi 20
ii- étape de fixation du support 90 sur la paroi 20
iii- étape facultative d'application d'un revêtement 110
iv- étape de réalisation de l'ouverture 50
v- étape d'assemblage de l'élément lumineux 70 sur le support 90 vi- étape de mise en place d'une résine 100 au sein de l'ouverture 50

Selon une alternative de ce mode de réalisation, l'étape iii est réalisée avant l'étape ii : on applique un revêtement (peinture) avant de fixer le support sur la face interne.

Selon une alternative de ce mode de réalisation, l'étape v est réalisée avant ou en parallèle de l'étape i : on assemble l'élément lumineux 70 et le support 90 avant de fixer le support sur la face interne 40.

Selon une alternative de ce mode de réalisation, l'étape iv est réalisée avant l'étape iii : on réalise l'ouverture 50 avant d'appliquer le revêtement (peinture).

Selon une alternative de ce mode de réalisation, l'étape iii est réalisée en dernier : on applique un revêtement (peinture) à la fin du procédé.

Un avantage de réaliser l'étape iii avant la mise en place de l'ouverture (étape iv) et de l'élément optique 60 (étape v), est d'éviter de réaliser une étape délicate de marouflage. Ceci représente un avantage important pour gérer la diversité.

Un avantage de réaliser l'étape iii avec cuisson des deux face 30 et 40 de la paroi 20, et d'améliorer l'adhésion du support 90 sur la face 40.

Un avantage de réaliser l'étape iv après l'étape ii, est de permettre un positionnement très précis de la paroi 20 dans l'outil d'usinage. En effet, pour réaliser l'ouverture dans la paroi 20, on utilise un outil (fraisage, laser...) et la paroi 20 doit être placée très précisément afin que l'ouverture soit parfaitement positionnée. On utilise alors le support 90 pour caler la paroi 20. De plus, le support90 permet alors un meilleur maintien dans cette position précise, évitant ainsi les vibrations induites par l'outil de réalisation de l'ouverture 50. Enfin, cet ordre des étapes permet de garantir une meilleure tenue de pièce « en une seule pièce ».

### Liste de références

- 10: : pièce de carrosserie de véhicule automobile
- 20: : paroi de la pièce de carrosserie 10
- 30: : face externe de la paroi 20
- 40: : face interne de la paroi 20
- 50: : ouverture traversante de la paroi 20, par exemple une fente courbe ou rectiligne
- 60: : élément optique de la pièce de carrosserie 10, fixé sur la face interne 40
- 70: : élément lumineux de l'élément optique 60
- 80: : corps souple de l'élément lumineux 70
- 90: : support de l'élément optique 60 dans lequel est inséré l'élément lumineux 70
- 92: : point d'injection de la résine 100 au niveau du support 90
- 94: : volume masselotte au niveau du support 90
- 100: : résine transparente ou translucide comblant l'ouverture 50
- 110: : revêtement tel qu'une peinture
- 120: : véhicule automobile

## Revendications

1. Pièce (10) de carrosserie de véhicule automobile (120), comportant une paroi (20) possédant une face externe (30), une face interne (40), et au moins une ouverture (50), la pièce (10) comportant un élément optique (60) fixé sur la face interne (40) en regard de l'ouverture (50), l'ouverture (50) étant comblée par une résine (100) transparente ou translucide de façon à assurer une étanchéité entre la face externe (30) et l'élément optique (60), l'élément optique (60) comportant au moins un support (90) fixé sur la face interne (40) en regard et le long de l'ouverture (50), **caractérisé en ce qu'** un élément lumineux (70) est fixé sur le support (90) directement en regard de l'ouverture (50), l'élément lumineux (70) comportant un corps principal (80) souple apte à être assemblé par insertion dans le support (90), et **en ce que** le support (90) comporte une zone technique (92) d'entrée du support (90) configuré pour insérer une buse d'injection de polyuréthane pour injecter la résine (100) et/ou une zone technique (94) de sortie du support (90) définissant un volume servant de masselotte afin de constituer un réservoir de trop-plein de la résine (100) injectée.

2. Pièce (10) selon la revendication précédente, dans laquelle l'élément optique (60) est fixé de façon étanche sur la face interne (40), par exemple par adhésivage.

3. Pièce (10) selon l'une des revendications précédentes, dans laquelle l'élément lumineux (70) est apte à transmettre une lumière depuis la face interne (40) vers la face externe (30) de la paroi (20) au travers de la résine (100).

4. Pièce (10) selon la revendication précédente, dans laquelle l'élément lumineux (70) est un ensemble de sources lumineuses de type LED par exemple, une fibre optique ou un guide de lumière relié à une source lumineuse de type LED par exemple.

5. Pièce (10) selon l'une des revendications précédentes, dans laquelle la résine (100) est injectable ou peut être coulée, à des pressions inférieures à 6 bars et des températures inférieures à 80°C.

6. Pièce (10) selon l'une des revendications précédentes, dans laquelle l'ouverture (50) et l'élément optique (60) sont longilignes.

7. Pièce (10) selon l'une des revendications précédentes, dans laquelle l'ouverture (50) ne vient pas en contact avec l'un des bords de la pièce (10).

8. Pièce (10) selon l'une des revendications précédentes, dans laquelle le support (90) est réalisé dans un matériau choisi seul ou en combinaison parmi les matériaux suivants : polypropylène, polypropylène transparent ou translucide, silicone transparent ou translucide, ou polyuréthane (PU) transparent ou translucide, polycarbonate mélangé à un additif de type élastomère, tel que du TPU, toute matière transparente ou translucide.

9. Pièce (10) selon l'une des revendications précédentes, dans laquelle le corps souple (80) de l'élément lumineux est réalisé dans un matériau choisi seul ou en combinaison parmi les matériaux suivants : silicone transparent ou translucide, ou polyuréthane (PU) transparent ou translucide, polycarbonate mélangé à un additif de type élastomère, tel que du TPU, polypropylène transparent.

10. Pièce (10) selon l'une des revendications précédentes, dans laquelle la résine (100) est réalisée dans un matériau choisi seul ou en combinaison parmi les matériaux suivants : polyuréthane (PU) transparent ou translucide.

11. Pièce (10) selon l'une des revendications précédentes, dans laquelle la paroi (20) est réalisée dans un matériau choisi seul ou en combinaison parmi les matériaux suivants : polypropylène ou polyuréthane.

12. Pièce (10) selon l'une des revendications précédentes, dans laquelle la face externe est recouverte d'un revêtement (110) de type peinture.

13. Pièce (10) selon l'une des revendications précédentes, formant un pare-chocs de véhicule automobile.

14. Procédé de fabrication d'une pièce (10) de carrosserie de véhicule automobile selon l'une des revendications précédentes, **caractérisé en ce que** l'on réalise les étapes suivantes :
i- étape de réalisation de la paroi (20) ;
ii- étape où l'on rapporte le support (90) de l'élément optique (60) sur la face interne
(40) de la paroi (20) ;
iv- étape de réalisation de l'ouverture (50) ;
v- étape d'assemblage de l'élément lumineux (70) sur le support (90) ;
vi- étape de mise en place d'une résine (100) au sein de l'ouverture (50).

15. Procédé selon la revendication précédente, dans lequel, à l'étape ii, on rapporte le support (90) avec le corps (80) sur la face interne (40) de la paroi (20).

16. Procédé selon l'une des revendications 14à 15, dans lequel on réalise séquentiellement les étapes i à vi.

17. Procédé selon l'une des revendications 14 à 17, dans lequel l'étape v est réalisée avant ou en parallèle de l'étape i.

18. Procédé selon l'une des revendications 16 à 19, dans lequel on réalise une étape iii d'application d'un revêtement (110), tel qu'une peinture.

19. Procédé selon la revendication précédente, dans lequel l'étape iii est réalisée avant l'étape ii.

20. Procédé selon l'une des revendications 18et 19, dans lequel l'étape iv est réalisée avant l'étape iii.

21. Procédé selon l'une des revendications 18 à 20, dans lequel l'étape iii est réalisée en dernier, après l'étape vi.

22. Procédé selon l'une des revendications 14 à 21, dans lequel lors de l'étape ii, on rapporte l'élément optique (60) par adhésivage.

23. Procédé selon l'une des revendications 14 à 22, dans lequel lors de l'étape vi on met en place la résine (100) au sein de l'ouverture (50), par injection ou coulée.

## Patentansprüche

1. Teil (10) für Kraftfahrzeugkarosserie (120), umfassend eine Wand (20) mit einer Außenseite (30), einer Innenseite (40) und wenigstens einer Öffnung (50), wobei das Teil (10) ein optisches Element (60) umfasst, das auf der Innenseite (40) der Öffnung (50) gegenüber befestigt ist, wobei die Öffnung (50) mit einem durchsichtigen oder lichtdurchlässigen Harz (100) aufgefüllt ist, um eine Abdichtung zwischen der Außenseite (30) und dem optischen Element (60) sicherzustellen, wobei das optische Element (60) wenigstens einen Träger (90) umfasst, der auf der Innenseite (40) der Öffnung (50) gegenüber und entlang dieser befestigt ist, **dadurch gekennzeichnet, dass** ein Leuchtelement (70) auf dem Träger (90) der Öffnung (50) unmittelbar gegenüber befestigt ist, wobei das Leuchtelement (70) einen flexiblen Hauptkörper (80) umfasst, der eingerichtet ist, um durch Einsetzen in dem Träger (90) montiert zu werden, und dadurch, dass der Träger (90) einen technischen Eingangsbereich (92) des Trägers (90) umfasst, der ausgelegt ist, um eine Polyurethaneinspritzdüse einzusetzen, um das Harz (100) einzuspritzen, und/oder einen technischen Ausgangsbereich (94) des Trägers (90) umfasst, der ein Volumen definiert, das als Speiser dient, um ein Überlaufgefäß für das eingespritzte Harz (100) zu bilden.

2. Teil (10) nach dem vorhergehenden Anspruch, wobei das optische Element (60) abdichtend auf der Innenseite (40) befestigt ist, zum Beispiel durch Haftvermittlung.

3. Teil (10) nach einem der vorhergehenden Ansprüche, wobei das Leuchtelement (70) eingerichtet ist, um Licht von der Innenseite (40) zur Außenseite (30) der Wand (20) durch das Harz (100) hindurch zu übertragen.

4. Teil (10) nach dem vorhergehenden Anspruch, wobei das Leuchtelement (70) eine Anordnung ist aus Lichtquellen vom LED-Typ zum Beispiel, ein Lichtwellenleiter oder ein Lichtleiter, der mit einer Lichtquelle vom LED-Typ zum Beispiel verbunden ist.

5. Teil (10) nach einem der vorhergehenden Ansprüche, wobei das Harz (100) einspritzbar oder gießbar ist, bei Drücken niedriger als 6 bar und Temperaturen niedriger als 80 °C.

6. Teil (10) nach einem der vorhergehenden Ansprüche, wobei die Öffnung (50) und das optische Element (60) langgezogen sind.

7. Teil (10) nach einem der vorhergehenden Ansprüche, wobei die Öffnung (50) mit einem der Ränder des Teils (10) nicht in Kontakt kommt.

8. Teil (10) nach einem der vorhergehenden Ansprüche, wobei der Träger (90) aus einem Material realisiert ist, das allein oder in Kombination unter den folgenden Materialien ausgewählt ist: Polypropylen, durchsichtiges oder lichtdurchlässiges Polypropylen, durchsichtiges oder lichtdurchlässiges Silikon, oder durchsichtiges oder lichtdurchlässiges Polyurethan (PU), Polycarbonat, das mit einem Zusatzstoff vom Elastomertyp vermischt ist, wie TPU, jedes beliebige durchsichtige oder lichtdurchlässige Material.

9. Teil (10) nach einem der vorhergehenden Ansprüche, wobei der flexible Körper (80) des Leuchtelements aus einem Material realisiert ist, das allein oder in Kombination unter den folgenden Materialien ausgewählt ist: durchsichtiges oder lichtdurchlässiges Silikon, oder durchsichtiges oder lichtdurchlässiges Polyurethan (PU), Polycarbonat, das mit einem Zusatzstoff vom Elastomertyp vermischt ist, wie TPU, durchsichtiges Polypropylen.

10. Teil (10) nach einem der vorhergehenden Ansprüche, wobei das Harz (100) aus einem Material realisiert ist, das allein oder in Kombination unter den folgenden Materialien ausgewählt ist: durchsichtiges oder lichtdurchlässiges Polyurethan (PU).

11. Teil (10) nach einem der vorhergehenden Ansprüche, wobei die Wand (20) aus einem Material realisiert ist, das allein oder in Kombination unter den folgenden Materialien ausgewählt ist: Polypropylen oder Polyurethan.

12. Teil (10) nach einem der vorhergehenden Ansprüche, wobei die Außenseite mit einer Beschichtung (110) vom Lacktyp bedeckt ist.

13. Teil (10) nach einem der vorhergehenden Ansprüche, das einen Stoßfänger für ein Kraftfahrzeug bildet.

14. Verfahren zum Herstellen eines Teils (10) für Kraftfahrzeugkarosserie nach einem der vorhergehenden Ansprüche, **dadurch gekennzeichnet, dass** die folgenden Schritte durchgeführt werden:
i- Schritt zum Realisieren der Wand (20);
ii- Schritt, wo der Träger (90) des optischen Elements (60) auf der Innenseite (40) der Wand (20) angebracht wird;
iv- Schritt zum Realisieren der Öffnung (50);
v- Schritt zum Montieren des Leuchtelements (70) auf dem Träger (90);
vi Schritt zum Einbringen eines Harzes (100) in die Öffnung (50).

15. Verfahren nach dem vorhergehenden Anspruch, bei dem, im Schritt ii, der Träger (90) mit dem Körper (80) auf der Innenseite (40) der Wand (20) angebracht wird.

16. Verfahren nach einem der Ansprüche 14 bis 15, bei dem die Schritte i bis vi fortlaufend realisiert werden.

17. Verfahren nach einem der Ansprüche 14 bis 17, bei dem der Schritt v vor oder parallel zu dem Schritt i realisiert wird.

18. Verfahren nach einem der Ansprüche 16 bis 19, bei dem ein Schritt iii zum Aufbringen einer Beschichtung (110), wie ein Lack, realisiert wird.

19. Verfahren nach dem vorhergehenden Anspruch, bei dem der Schritt iii vor dem Schritt ii realisiert wird.

20. Verfahren nach einem der Ansprüche 18 und 19, bei dem der Schritt iv vor dem Schritt iii realisiert wird.

21. Verfahren nach einem der Ansprüche 18 bis 20, bei dem der Schritt iii als letzter, nach dem Schritt vi, realisiert wird.

22. Verfahren nach einem der Ansprüche 14 bis 21, bei dem beim Schritt ii das optische Element (60) durch Haftvermittlung angebracht wird.

23. Verfahren nach einem der Ansprüche 14 bis 22, bei dem beim Schritt vi das Harz (100) in die Öffnung (50) eingebracht wird, durch Einspritzen oder Gießen.

## Claims

1. A bodypart (10) of a motor vehicle (120), comprising a wall (20) having an external face (30), an inner face (40), and at least one opening (50), the part (10) having an optical element (60) fixed on the inner face (40) opposite the opening (50), the opening (50) being filled with a transparent or translucent resin (100) so as to ensure a seal between the external face (30) and the optical element (60), the optical element (60) comprising at least one support (90) fixed on the inner face (40) opposite and along the opening (50), **characterised in that** a luminous element (70) is fixed to the support (90) directly opposite the opening (50), the light element (70) comprising a flexible main body (80) suitable for assembly by insertion into the support (90), and **in that** the support (90) comprises a technical area (92) of the inlet of the support (90) configured for inserting a polyurethane injection nozzle for injecting the resin (100) and/or a technical area (94) of the outlet of the support (90) defining a volume serving as a mass in order to constitute an overflow tank of the injected resin (100).

2. Bodypart (10) according to the preceding claim, wherein the optical element (60) is tightly fixed to the inner face (40), e.g. by adhesive.

3. Bodypart (10) according to one of the preceding claims, wherein the light element (70) is capable of transmitting light from the inner face (40) to the outer face (30) of the wall (20) through the resin (100).

4. Bodypart (10) according to the preceding claim, wherein the light element (70) is a set of light sources of the type LED for example, an optical fiber or a light guide connected to a light source of the type LED for example.

5. Bodypart (10) according to one of the preceding claims, wherein the resin (100) is injectable or can be cast, at pressures below 6 bar and temperatures below 80°C.

6. Bodypart (10) according to one of the preceding claims, wherein the opening (50) and the optical element (60) are slender.

7. Bodypart (10) according to one of the preceding claims, wherein the opening (50) does not come into contact with any of the edges of the Bodypart (10).

8. Bodypart (10) according to one of the preceding claims, wherein the support (90) is made of a material chosen alone or in combination from the following materials: polypropylene, transparent or translucent polypropylene, transparent or translucent silicone, or transparent or translucent polyurethane (PU), polycarbonate mixed with an elastomer-type additive, such as TPU, any transparent or translucent material.

9. Bodypart (10) according to one of the preceding claims, wherein the flexible body (80) of the light element is made of a material chosen alone or in combination from the following materials: transparent or translucent silicone, or transparent or translucent polyurethane (PU), polycarbonate mixed with an elastomer-type additive, such as TPU, transparent polypropylene.

10. Bodypart (10) according to one of the preceding claims, wherein the resin (100) is made of a material chosen alone or in combination from the following materials: transparent or translucent polyurethane (PU).

11. Bodypart (10) according to one of the preceding claims, wherein the wall (20) is made of a material chosen alone or in combination from the following materials: polypropylene or polyurethane.

12. Bodypart (10) according to one of the preceding claims, wherein the outer face is covered with a paint-like coating (110).

13. Bodypart (10) according to one of the preceding claims, forming a motor vehicle bumper.

14. Method for manufacturing a Bodypart (10) of a motor vehicle according to one of the preceding claims, **characterised in that** the following steps are performed:
i- wall construction step (20);
ii- step in which the support (90) of the optical element (60) is transferred to the inner face (40) of the wall (20);
iv- step of making the opening (50);
v- assembly step of the light element (70) to the bracket (90);
vi- step of placing a resin (100) within the opening (50).

15. Method according to the preceding claim, wherein in step ii the support (90) is attached to the body (80) on the inner face (40) of the wall (20).

16. Method according to one of claims 14 to 15, wherein steps i to vi are carried out sequentially.

17. Method according to one of claims 14 to 16, wherein step v is carried out before or in parallel with step i.

18. Method according to one of claims 16 to 17, wherein a step iii of applying a coating (110), such as a paint, is performed.

19. Method according to the preceding claim, wherein step iii is carried out before step ii.

20. Method according to one of claims 18 and 19, wherein step iv is carried out before step iii.

21. Method according to one of claims 18 to 20, wherein step iii is carried out last, after step vi.

22. Method according to one of claims 14 to 21, wherein in step (ii) the optical element (60) is added by adhesive.

23. Method according to one of claims 14 to 22, wherein in step vi the resin (100) is placed within the opening (50) by injection or casting.
